Europäisches Patentamt

European Patent Office

Office européen des brevets

(19)

(11) Publication number: **0 384 336**
**A1**

## EUROPEAN PATENT APPLICATION

(12)

(21) Application number: **90103109.6**

(22) Date of filing: **19.02.90**

(51) Int. Cl.5: **F02C 6/00, F02C 3/30,**
**F02C 3/36, F01K 21/04,**
**F01K 3/24**

(30) Priority: **22.02.89 IT 1952789**

(43) Date of publication of application:
**29.08.90 Bulletin 90/35**

(84) Designated Contracting States:
**AT BE CH DE ES FR GB LI NL SE**

(71) Applicant: **Gaia, Mario**
**Via Plutone 48**
**I-20060 Cassina de Pecchi, Milano(IT)**

(72) Inventor: **Gaia, Mario**
**Via Plutone 48**
**I-20060 Cassina de Pecchi, Milano(IT)**

(74) Representative: **Marietti, Giuseppe**
**CENTRO DI CONSULENZA IN PROPRIETA'**
**INDUSTRIALE Viale Caldara, 43**
**I-20122 Milano(IT)**

(54) **A method and equipment for converting thermal energy into mechanical energy.**

(57) Thermal energy from effluents at high temperature, such as for example gases and fumes coming from the incineration of wastes (1) or biomasses, is converted into mechanical energy by means of a method wherein, after obtaining combustion gas at temperature exceeding approximately 600°C, the gas temperature is reduced, if necessary, to an appropriate value for expansion in a turbine (9), for example 500°C, by immission of water vapor (8) or liquid water (7), then the gaseous mixture thus obtained is expanded in a turbine unit (9) up to a certain degree of vacuum (turbine expansion ratio = 1,5 - 10), the mixture coming out from the turbine unit is cooled down (12) to such a temperature as to obtain separation of part of the water content as a liquid phase, the formed liquid phase is separated, the residual gases are compressed by means of a compressor (16) and discharged to the atmosphere.

The whole cycle, up to the discharge stage, is preferably performed at sub-atmospheric pressure.

The injection of water (7) and/or steam (8) can take place into the duct (6) conveying gases to the turbine (9) or directly into the combustion chamber (2).

In order to increase the water fraction present in the mixture of gases to be expanded in the turbine (9), oxygen-enriched air (3) can be used for combustion.

# A METHOD AND EQUIPMENT FOR CONVERTING THERMAL ENERGY INTO MECHANICAL ENERGY

The invention relates to a method and an equipment for converting thermal energy into mechanical energy. More in particular, the invention relates to a method and an equipment for converting into mechanical energy the thermal energy produced by the incineration of wastes or the combustion of low heat value fuels or, anyway, the thermal energy contained in gases at high temperature and at a pressure near to the atmospheric one.

The best use of the energetic content of hot gases coming from incineration plants or industrial ovens at high temperature consists in the production of mechanical energy and then electric power.

In fact, electric power produced by a plant included in an extended electric network can be at any time absorbed by the network and usefully exploited by a far end-user. On the contrary, the direct use of thermal energy is restrained by a number of conditions due to the distance between source and end-user and to the need of having simultaneousness between production and use.

In the case of systems capable of producing, after conversion, electric power in the order of some MWatt, the known steam plants are generally used. If, on the contrary, the power obtainable as electric energy is lower, for example in the order of 100 - 1000 KWatt, the costs for the set up, operation and service of a traditional steam plant are too high.

This is the case of small-scale plants for the incineration of wastes or the combustion of fuels with low heat value and high content in ashes and moisture.

Furthermore, the traditional regeneration plants are generally uncapable of taking advantage, for the conversion of thermal energy into mechanical energy, of the water content of the hot gas available.

Therefore there is the need of providing a method and an equipment to recover thermal energy available on reduced scale in plants, such as incinerators, ovens or the like, and to convert it into mechanical energy, wherein capital investment and operating costs be proportional to the energetic advantages that can be obtained.

An object of the present invention is to provide a method to obtain an economically advantageous conversion into mechanical energy of thermal energy available in a stream of gaseous effluents at high temperature, in particular downstream of combustion plants, incinerators and the like on a small scale.

Another object of the present invention is to provide a method and an equipment to carry-out a process for waste incineration which causes a reduced quantity of gas to be discharged to the atmosphere per unit of incinerated waste mass and with a reduced content in pollutants and moisture in said gases.

Said objects are achieved by means of the invention which essentially relates to a method for converting thermal energy into mechanical energy characterized by the steps of:
- obtaining combustion gas at a first level of temperature, exceeding 600°C, with a water content, in the form of vapor, exceeding 10% in mass;
- expanding said gas in a turbine unit capable of generating mechanical energy, up to a pressure below the atmospheric pressure, the turbine expansion ratio ranging between 1,5 and 10;
- cooling the gas discharged from the turbine down to such a temperature as to obtain condensation of part of the water vapor present;
- eliminating the thus formed liquid phase;
- compresssing and discharging to the atmosphere the remaining gaseous mixture.

The invention furthermore relates to an equipment for the conversion of energy according to the aforedescribed method, characterized in that it comprises, in sequence:
- a duct for feeding combustion gases;
- a turbine unit downstream said duct;
- means for cooling the gas discharged from the turbine unit and separating the thus formed liquid phase;
- means for compressing and discharging the remaining gaseous phase downstream the cooling and separating means.

Finally, the invention relates to the preferential use of the aforedescribed method and equipment for the elimination of wastes by combustion, in particular the elimination of biomasses with high content in ashes and moisture.

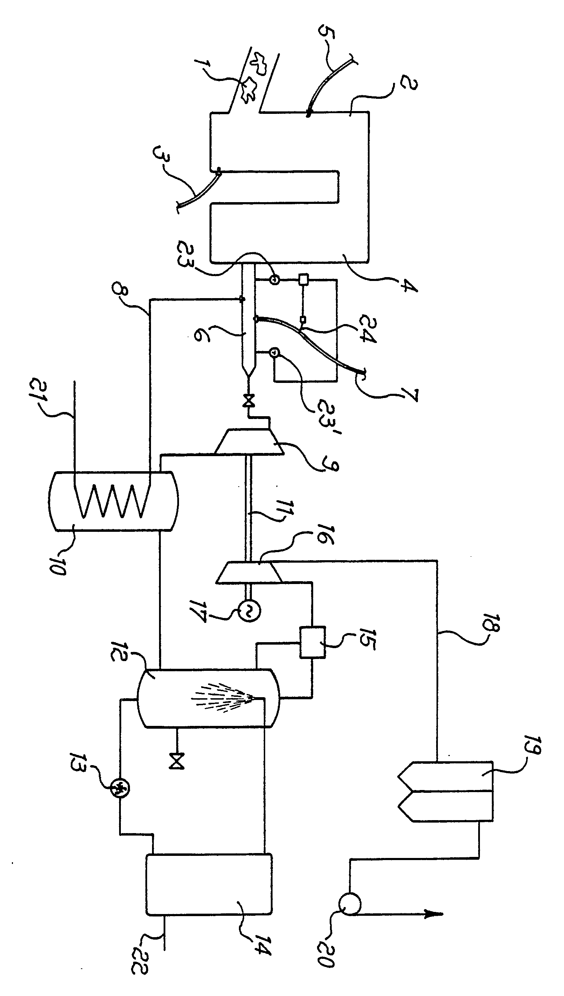

The invention will be now further described, by way of illustrative and non-limiting example, with reference to the accompanying drawing the only figure of which shows a schematic diagram of an equipment according to the invention.

According to the principle of the invention, the thermal energy of combustion gases at high temperatures (600 -1400°C) and with high water vapor content is exploited. Gases can possibly be put in direct contact with water vapor and/or liquid water to be cooled down to a temperature suitable for a turbine and simultaneously to obtain a gaseous mixture containing a high percentage of water vapor and having a large volume. Said gaseous mixture is caused to expand in a turbine to generate mechanical energy, the mixture released from the turbine is cooled down to approximately room temperature and the formed liquid phase is eliminated. The remaining gaseous mixture is finally discharged to the atmosphere after compression.

Combustion gases at such high temperatures can be obtained from any suitable source, such as for instance the fume duct of a waste incinerator, and the scheme in the figure as well as the following description refer to this particular application, however without any restriction of the field of the invention to this single application.

With reference to the figure, some wastes 1 are introduced, possibly by means of a pusher (not illustrated), into a combustion chamber 2, where they are burnt.

A duct 3 possibly for oxygen feeding comes out into the combustion chamber 2, in a way that, if necessary and appropriate, combustion takes place in $O_2$ enriched air or even in oxygen atmosphere. This has the double objective of performing a complete combustion of wastes, even if these have high content in moisture and ashes, and of obtaining combustion gases at the desired temperature, exceeding 600°C (generally around 1200°C). In order to complete combustion and reduce the presence of pollutants, a post-combustion chamber 4 can be positioned downstream of chamber 2.

If necessary, the temperature in the combustion chamber 2 is regulated also by injecting, by way of nozzles, liquid water and/or water vapor coming from a duct 5, obviously to reduce the temperature in case it exceedingly increases.

The gases released from the incinerator are conveyed directly into a turbine, if the temperature conditions and water vapor content allow it, or they are caused to pass through a duct 6 where two ducts 7 and 8 respectively, feed water and water vapor. The steam duct 8 comes from a regenerative heat exchanger 10 or from another source (for example not otherwise usable geothermic vapor). Thanks to vapor injection, the gaseous mixture temperature is brought to values suitable for the operation of a turbine 9 positioned downstream, with simultaneous considerable increase of the flow volumes introduced and processed by the turbine. Through the duct 7 liquid water can be injected to regulate, if necessary, the temperature of the gaseous mixture, lowering it quickly by vaporisation. The temperature can be detected for example by means of temperature sensors 23 and 23′ actuating a regulating valve 24.

As mentioned, the duct 6 is connected to a turbine 9 wherein the gaseous mixture with high water vapor content expands, transforming the thermal and pressure energy into mechanical energy.

The turbine 9 outlet is connected to a regenerative exchanger 10 for the first cooling of the expanded gaseous mixture, the exchanger being fed on the other side (in 21) with water to generate steam fed to the duct 8.

For better efficiency, upstream the exchanger acting as evaporator may be foreseen, on the gases duct, an exchanger acting as superheater. In case of availability of steam coming from outside the cycle, said steam can be superheated in said superheater before being conveyed to the duct 6.

Downstream the exchanger 10 there a last exchanger 12 is connected for countercurrent wash and cool the expanded gases with water; water for countercurrent washing is circulated by means of a pump 13 and refrigerated in a cooling and conditioning system generally indicated by 14, then it is sent to the exchanger 12 where incoming gases are spray washed by direct contact. Reference 22 indicates a duct through which excess water coming from vapor condensation in the exchanger 12 is discharged.

Gases released from the latter are then conveyed to a drop separator 15 where possible drops drawn by gases are separated therefrom before the gases are conveyed to a compressor 16. Said compressor is driven by the turbine 9 by means of the shaft 11 which actuates an electric generator 17 as well. The compressor 16 outlet is connected, through a duct 18, to a device 19, known in itself, for gas filtering, and then to a stack 20 for the discharge to the atmosphere.

During operation, wastes or fuels (both solid and liquid) are introduced into the combustion chamber 2 and burnt therein in an atmosphere that can be enriched with oxygen. The enrichment with oxygen of the usual supporter of combustion (air) allows to introduce a reduced amount of air; the reduced amount of air necessary for combustion results in a reduced quantity of gas per unit of incinerated waste mass, which is finally discharged to the atmosphere and which therefore must be previously purified.

As already mentioned, oxygen introduction into the chamber 2 allows to obtain combustion gases at the desired high temperature, for instance 1200°C, and the air flowrate is adjusted in a way as to have oxygen excess in the gas downstream the chamber 2, in order to ensure complete oxidation.

According to the kind of fuel used, the gas temperature can be regulated by injecting water and/or steam into the combustion chamber 2.

At the chamber 2 outlet gases are submitted to a stay time with possible "post-combustion" in the chamber 4 in order to reduce the presence of pollutants in the gaseous mixture.

At this point the mixture, mainly consisting of $CO_2$, $H_2O$ (steam), $O_2$, $N_2$ is reduced in temperature (desuperheated) by addition of water vapor and possibly liquid water in the duct 6. Vapor preferably comes from the regenerative exchanger 10.

The thus desuperheated gas has a high content in water vapor at an essentially equal pressure as the atmospheric one. Preferably, pressure will be slightly lower than the atmospheric pressure, so as to avoid possible leakage from chambers 2 and 4 towards the outside.

The gaseous mixture at high vapor content is then caused to expand in the turbine 9 until it reaches a definitely lower pressure than the atmospheric one (for example 0,3 absolute bars). The ratio between pressure at the turbine inlet and pressure at the turbine outlet may range from 1,5 to 10, according to the features of compressor 16 and cooling system 10,12.

The mechanical power produced by the turbine 9 is partly used to operate the compressor 16 and partly used to produce electric power by means of a generator 17.

The expanded gaseous mixture coming out from the turbine 9 is therefore at a lower pressure than the atmospheric pressure and, before being discharged through the stack, it must be compressed. Before compression, however, the mixture is cooled in two different stages. Firstly it is caused to pass through the regenerative heat exchanger 10 where steam to be conveyed to the duct 6 is produced; then in the exchanger 12 gases are submitted to a countercurrent spray flow of water at low temperature.

The cooling water for said exchanger is brought to the desired temperature (generally at approximately 25 - 30°C) in the cooling system 14 and allows the gaseous mixture to be cooled at the temperature of approximately 35°C.

Consequently most of the water vapor present in the expanded mixture condenses following cooling and is separated as liquid phase. A further quantity of water drawn by gases is separated from them in the drop separator 15 so that gas reaching the compressor contains a reduced percentage of water vapor. Gas is then compressed up to atmospheric pressure in almost adiabatic conditions, conveyed to the filter 19 and discharged to the atmosphere through the stack 20.

It is obvious that, being the temperature of gases at the compressor inlet lower than their temperature at the turbine inlet and, above all, being the mass flowrate of drawn vapor and water much smaller at the compressor inlet than at the turbine inlet, the power absorbed by the compressor is lower than the power supplied by the turbine and therefore production of electric power is possible by means of the generator 17. Furthermore, the reduced quantity of vapor present in the discharged fumes and the temperature of same prevents formation of a plume visible at the stack outlet.

An example of the method according to the invention is now reported.

## EXAMPLE

After the oven 2, 4 has been brought to the operating temperature by heating by means of a fossil fuel burner, startup operations are completed by establishing circulation of cooling water and aspiration on the filter 19, and actuating the turbine by means of a motor which may also be the generator 17. In the startup stage and generally in transients, depending on the type of turbomachinery used, it may be necessary to use valves not shown in the figure, to connect the compressor aspiration duct to the atmosphere and/or to reduce the turbine incoming flow.

Approximately 3000 kg/hour of a poor fuel (for instance not completely dried mown grass with highest calorific value 5,31 $10^6$ J/kg) (1270 Kg/h) are then introduced. The content in $H_2O$ is approximately 60%. Combustion is performed using highly oxygen-enriched air (pure oxygen content equal to 1.2 times the atmospheric content) up to a temperature of approximately 1100°C, considering thermal losses in the combustion chamber, with an additional oxygen flow of 398 kg/h. A gaseous mixture at approximately 1 absolute bar is obtained containing approximately 0.36 kg of $N_2$, 0.20 kg of $CO_2$ and 0.41 kg of $H_2O$ for each kg of gas, with a gaseous flow of approximately 6000 kg/hour.

The mixture is desuperheated with approximately 1400 kg/hour of steam at 100°C and approximately 600 kg/hour of liquid water and is then expanded from 1 bar to 0.25 absolute bars.

After a first cooling in 10 and a subsequent cooling at approximately 36°C in 12, the mixture goes through the separator and is compressed at atmospheric pressure at approximately 200°C in 16.

Power developed by the turbine 9 is 820 kw, power absorbed by the compressor is approximately 220 kw; power available to actuate the generator is therefore 600 kw. The compressed gas is then filtered in 19 by bag filters and discharged through the stack 20.

The plant output, referred to the highest calorific value is therefore = 0.13; the output , referred to the heat yieldable by gases through cooling, but without condensation, as it is obtained in a normal steam motor, results to be = 0.20 approximately.

It can be noticed that the compressor power represents a slight fraction of the turbine power unlike what occurs in a conventional gas turbine.

Claims

1. A method for converting thermal energy into mechanical energy, characterized by the steps of:
- obtaining combustion gas at a temperature exceeding 600°C, with a water content, in the form of steam, exceeding 10% in mass;
- expanding the gas in a turbine unit capable of generating mechanical energy down to a pressure lower than the atmospheric pressure, the expansion ratio obtained ranging within 1,5 and 10;
- cooling the gas outcoming from the turbine down to such a temperature as to obtain condensation of part of the water vapor present;
- eliminating the formed liquid phase;
- compressing and discharging to the atmosphere the remaining gaseous mixture.

2. A method according to claim 1, wherein the whole cycle is carried-out at a sub-atmospheric pressure.

3. A method according to claim 1 or 2, wherein the temperature of the combustion gas is reduced, before it enters the turbine, at a level suitable for use in the turbine itself, by injection of water vapor and/or liquid water.

4. A method according to claim 3, wherein at least part of the vapor introduced for reducing the temperature level of the combustion gases is produced by a regenerative heat exchanger, which is heated by the mixture outcoming from the turbine unit.

5. A method according to claim 1, 2, 3 or 4 wherein the combustion gas is obtained by combustion with oxygen or oxygen-enriched air.

6. A method according to any of the preceding claims, wherein cooling of the gas-vapor mixture coming from the turbine is performed, at least in its final stage, by direct exchange with sprayed water.

7. A method according to claim 3 or claim 4, wherein the vapor introduced is superheated in a regenerative exchanger positioned downstream the turbine on the gas duct.

8. An equipment for energy conversion according to the method of at least one of the preceding claims, characterized in that it comprises:
- a duct for feeding combustion gases;
- a turbine unit downstream said duct;
- means for cooling the gas outcoming from the turbine unit and for separating the formed liquid phase;
- means for compressing and discharging the remaining gaseous phase downstream the cooling and separating means.

9. An equipment according to claim 8, wherein gases at high temperature are obtained in a combustion chamber, with possible post-combustion chamber, said chamber being fed in a way as to obtain release of combustion gas at a temperature level exceeding 600°C.

10. An equipment according to claim 9, wherein the combustion chamber is provided with a device for $O_2$ introduction or enrichment of combustion air with $O_2$.

11. An equipment according to claim 9 or 10, wherein means for water vapor and/or liquid water injection upstream of the turbine are foreseen.

12. An equipment according to claim 11, and comprising at least a regenerative exchanger for the formation and/or superheating of the steam to be injected, said exchanger being heated by means of the gas outcoming from the turbine unit.

13. An equipment according to any of the preceding claims, wherein said cooling means for the gas-vapor mixture comprises a mixture exchanging unit fed with sprayed cold water.

14. Use of the method and/or of the equipment according to at least one of the preceding claims for waste elimination by combustion.

15. Use according to claim 14, for the elimination by combustion of substances with high water content, such as not completely dried biomasses.

EP 0 384 336 A1

European Patent Office

**EUROPEAN SEARCH REPORT**

Application Number

EP 90 10 3109

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1284335 (ROLLS-ROYCE)<br>* page 2, lines 3 - 107; figure 1 *<br>--- | 1, 3, 4,<br>6-8,<br>11-13 | F02C6/00<br>F02C3/30<br>F02C3/36<br>F01K21/04<br>F01K3/24 |
| X | GB-A-2074659 (VSESOJUZNI GOSUDARSTVENNY PROEKTNY INSTITUT "TEPLOELEKTROPROEKT")<br>* abstract *<br>* page 3, lines 89 - 101; figures 1, 2 *<br>--- | 1, 3, 4,<br>6-9,<br>11-13 | |
| X | DE-A-2759286 (FUNK)<br>* page 8, line 18 - page 9, line 7 *<br>* page 9, line 17 - page 10, line 22; figure 1 *<br>--- | 1-3, 8,<br>11, 13 | |
| A | US-A-3854300 (GERHOLD)<br>--- | | |
| A | FR-A-2353709 (TECHNIP)<br>----- | | |
| | | | **TECHNICAL FIELDS SEARCHED (Int. Cl.5)**<br><br>F02C<br>F01K<br>F23J |

The present search report has been drawn up for all claims

| Place of search | Date of completion of the search | Examiner |
|---|---|---|
| THE HAGUE | 22 MAY 1990 | ERNST J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P0401)